# EUROPÄISCHE PATENTSCHRIFT

(11) **EP 2 590 842 B1**
(45) Veröffentlichungstag und Bekanntmachung des Hinweises auf die Patenterteilung: **23.07.2014**
(21) Anmeldenummer: 11719006.6
(22) Anmeldetag: 11.05.2011
(51) Int. Cl.: F16H 21/44, B60T 7/06, B60T 7/04, B60T 11/18

(54) **SENSOREINRICHTUNG FÜR EIN PEDAL UND VERFAHREN ZUM BEREITSTELLEN EINER INFORMATION BEZÜGLICH EINER BETÄTIGUNG EINES PEDALS**
PEDAL SENSOR DEVICE AND METHOD FOR PROVIDING AN INFORMATION WHEN USING SUCH A PEDAL
PEDALERIE AVEC CAPTEUR ET PROCÉDÉ DE FOURNITURE D'INFORMATIONS D'UN TEL PÉDALERIE

(30) Priorität: 07.07.2010 DE 102010031063
(43) Veröffentlichungstag der Anmeldung: 15.05.2013
(73) Patentinhaber: Robert Bosch GmbH, 70442 Stuttgart (DE)
(72) Erfinder: WEIBERLE, Reinhard, 71665 Vaihingen/Enz (DE); HASSDENTEUFEL, Frank, 71229 Leonberg (DE)
(86) Internationale Anmeldenummer: PCT/EP2011/057616
(87) Internationale Veröffentlichungsnummer: WO 2012/004030

(56) Entgegenhaltungen:
- WO-A1-2010/069679
- DE-A1- 10 118 436
- DE-A1-102005 024 577

## Beschreibung

Die Erfindung betrifft eine Sensoreinrichtung für ein Pedal. Des Weiteren betrifft die Erfindung ein Verfahren zum Bereitstellen einer Information bezüglich einer Betätigung eines Pedals.

### Stand der Technik

In der DE 10 2005 024 577 A1 oder in DE 101 184 36 A1 sind eine Vorrichtung und ein Verfahren zur elektromechanischen Bremsunterstützung beschrieben. Bei dieser Vorrichtung und bei dem entsprechenden Verfahren wird eine auf ein Bremspedal ausgeübte Kraft eines Fahrers mittels eines an dem Bremspedal angebrachten Kraftsensors gemessen. Anschließend wird eine der gemessenen Kraft entsprechende Unterstützungskraft mittels eines Servomotors eines Bremskraftverstärkers auf einen an der von dem Bremspedal zu einem Hauptbremszylinder verlaufenden Spindelschraube angebrachten Mitnehmer ausgeübt. Auf diese Weise soll eine elektromechanische Bremsunterstützung eines Fahrers beim Abbremsen seines Fahrzeugs gewährleistbar sein.

### Offenbarung der Erfindung

Die Erfindung schafft eine Sensoreinrichtung für ein Pedal mit den Merkmalen des Anspruchs 1 und ein Verfahren zum Bereitstellen einer Information bezüglich einer Betätigung eines Pedals mit den Merkmalen des Anspruchs 11.

### Vorteile der Erfindung

Bei einem Einsetzen der erfindungsgemäßen Sensoreinrichtung oder bei einem Ausführen des entsprechenden Verfahrens entfällt die Notwendigkeit eines Anbringens eines Kraftsensors an einem Pedal zum Messen einer auf das Pedal ausgeübten Betätigungskraft. Da das Anbringen eines derartigen Kraftsensors in einem unmittelbaren Kontakt zu dem Pedal mit einem vergleichsweise großen Aufwand verbunden ist, lassen sich mittels der erfindungsgemäßen Technologie Herstellungskosten für eine mittels eines Pedals ansteuerbare Vorrichtung, beispielsweise für ein fahrzeugeigenes Bremssystem mit einem Bremspedal, einsparen.

Mittels der erfindungsgemäßen Sensoreinrichtung und dem entsprechenden Verfahren kann auch ein herkömmlicher Sensor zur (direkten) Messung eines Drehwinkels eines Pedals eingespart werden. Da ein herkömmlicher Sensor zur Messung eines Pedal-Drehwinkels in der Regel einem vermessbaren/erfassbaren Winkelbereich von etwa 45° aufweisen sollte, ist seine Herstellung vergleichsweise teuer. Zusätzlich entfällt bei der Anwendung der erfindungsgemäßen Technologie der vergleichsweise große Aufwand, welcher herkömmlicher Weise beim Ausstatten eines neuen Pedal-Typs mit einem standartgemäßen Sensor zur Messung eines Pedal-Drehwinkels aufzubringen ist. Die erfindungsgemäße Sensoreinrichtung und das entsprechende Verfahren sind somit kostengünstige Alternativen zu einem herkömmlichen Sensor zur (direkten) Messung eines Pedal-Drehwinkels.

Des Weiteren ist die erfindungsgemäße Technologie im Gegensatz zu einer Messung eines Drehwinkels eines Pedals ausführbar, obwohl die Sensoreinrichtung nicht in unmittelbarer Nähe des Pedals, insbesondere im Fahrzeuginnenraum, angebracht ist. Somit entfällt beispielsweise das Risiko einer Verletzung des Fahrers durch einen zumindest teilweise im Fahrzeuginnenraum angebrachten Sensor zur Messung des Drehwinkels des Bremspedals.

Die erfindungsgemäße Sensoreinrichtung und das entsprechende Verfahren sind mittels eines einzelnen kostengünstigen Sensors, wie beispielsweise eines Hallsensors, eines GMR-Sensors oder eines AMR-Sensors, realisierbar. Für die Auswertung der von einem derartigen Sensor bereitgestellten Information ist keine teuere Elektronik notwendig. Außerdem ist der Bauraumbedarf eines derartigen Sensors vergleichsweise niedrig.

Somit erleichtert die vorliegende Erfindung die Integration von Pedalsteuerbaren Systemen, wie beispielsweise eines Pedalsteuerbaren Bremssystems, in ein Fahrzeug.

Die Sensoreinrichtung ist dazu ausgelegt, eine Stellung und/oder eine Stellungsänderung der in die Rotationsbewegung versetzten Eingangsstange in Bezug zu einer vorgegebenen Raumrichtung zu erfassen. Man kann die Funktionsweise der Sensoreinrichtung auch so umschreiben, dass mittels der Sensoreinrichtung mindestens eine Größe bezüglich eines Abstands, einer Abstandänderung, einer Ausrichtung und/oder einer Ausrichtungsänderung der in die Rotationsbewegung versetzten Eingangsstange in Bezug zu der vorgegebenen Raumrichtung erfassbar ist.

Insbesondere kann die Sensoreinrichtung dazu ausgelegt sein, die mindestens eine ermittelbare Größe über eine berührungslose Wechselwirkung zu ermitteln. Unter der berührungslosen Wechselwirkung kann beispielsweise eine Wechselwirkung eines Magnetfelds und/oder eines elektrischen Felds einer von der Eingangsstange umfassten Komponente mit der Sensoreinrichtung verstanden werden. Ebenso kann ein ortsfestes Magnetfeld und/oder ein ortsfestes elektrisches Feld mit der an der Eingangsstange angebrachten Sensoreinrichtung, welche bei einer Betätigung des Pedals zusammen mit der Eingangsstange in eine Rotationsbewegung versetzbar ist, wechselwirken.

Des Weiteren kann die Sensoreinrichtung auch einen optischen Detektor aufweisen, mittels welchem ein an der Eingangsstange reflektierter Lichtstrahl auf einer Auftreffposition nachweisbar ist. Ebenso kann der Detektor auch fest an der Eingangsstange angebracht sein, um eine Auftreffposition eines an einem ortsfesten Reflektor reflektierten Lichtstrahls zu ermitteln. In beiden Fällen ist die Auswerteeinrichtung vorzugsweise dazu ausgelegt, mittels der ermittelten Auftreffposition die Ausrichtung und/oder die Ausrichtungsänderung der Eingangsstange in Bezug zu der vorgegebenen Raumrichtung zu ermitteln/festzulegen. Die Ausführbarkeit der Sensoreinrichtung ist jedoch nicht auf die hier aufgezählten Beispiele beschränkt.

Die in den oberen Absätzen gemachten Ausführungen zur Sensoreinrichtung gelten entsprechend auch für einen damit ausgestatten Wandler, ein damit ausgestattetes Bremssystem und das erfindungsgemäße Verfahren.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer ersten Ausführungsform der Sensoreinrichtung;
- Fig. 2: eine schematische Darstellung einer zweiten Ausführungsform der Sensoreinrichtung; und
- Fig. 3: ein Flussdiagramm zum Darstellen des Verfahrens zum Bereitstellen einer Information bezüglich einer Betätigung eines Pedals.

### Ausführungsformen der Erfindung

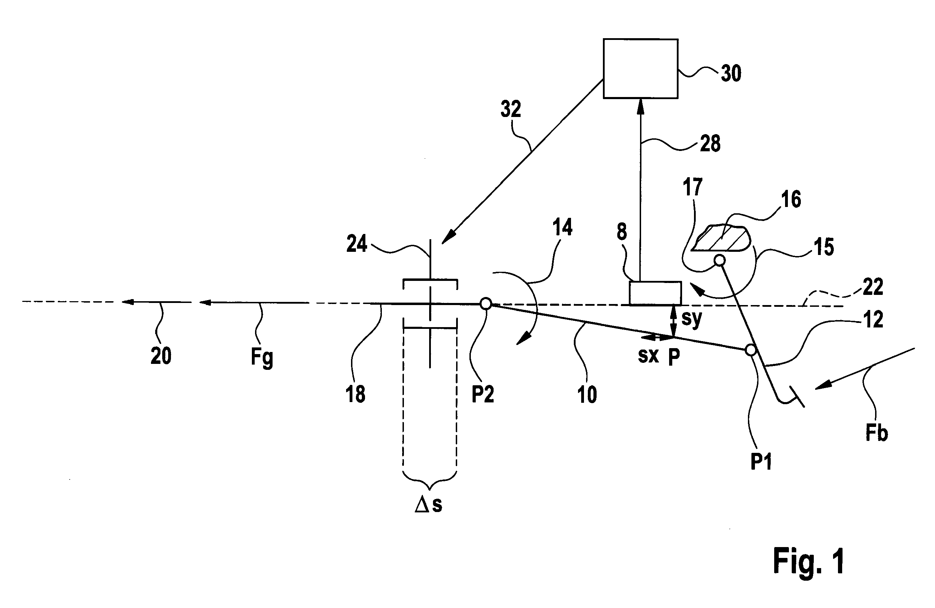

Fig. 1 zeigt eine schematische Darstellung einer ersten Ausführungsform der Sensoreinrichtung.

Der in Fig. 1 zusammen mit der Sensoreinrichtung 8 dargestellte Rotations-Translations-Wandler weist eine Eingangsstange 10 auf, welche derart an einem Pedal 12 anordbar/angeordnet ist, dass die Eingangsstange 10 bei einer Betätigung des Pedals 12 zumindest in eine mittels des Pfeils 14 schematisch wiedergegebene Rotationsbewegung versetzbar ist. Beispielsweise kann die Eingangsstange 10 an einem ersten Ende P1 so an dem Pedal 12 anordbar/angeordnet sein, dass die Betätigung des Pedals 12 die Eingangsstange 10 in eine Bewegung mit einer Rotationskomponente (Drehkomponente), insbesondere um ein zweites Ende P2 der Eingangsstange 10, versetzt. Zusätzlich kann die Bewegung, in welche die Eingangsstange 10 versetzbar ist, auch eine translatorische Komponente umfassen. Vorzugsweise wird der Punkt P2 bei dieser Bewegung entlang einer Geraden verstellt. Bei einer Nicht-Betätigung des Pedals 12 liegt die Eingangsstange 10 vorteilhafter Weise in einer Ausgangsstellung vor.

Das mit dem Rotations-Translations-Wandler einsetzbare Pedal 12 ist bevorzugter Weise so ausgelegt, dass es bei einem Betätigen zumindest in eine mittels des Pfeils 15 schematisch wiedergegebene Drehbewegung gegenüber einer ortsfesten Verankerung 16 versetzbar ist. Insbesondere kann die mittels des Pfeils 15 schematisch wiedergegebene Drehbewegung um einen Verankerungspunkt 17 des Pedals 12 gerichtet sein. Das Pedal 12 kann insbesondere als Bremspedal eines Fahrzeugs ausgebildet sein. Es wird jedoch darauf hingewiesen, dass die Einsetzbarkeit der hier beschriebenen Sensoreinrichtung 8 nicht auf ein Zusammenwirken mit einem Bremspedal beschränkt ist. Beispielsweise ist die Sensoreinrichtung auch zusammen mit einem Kupplungspedal eines Fahrzeugs verwendbar.

Der Rotations-Translations-Wandler weist auch eine Ausgangsstange 18 auf, welche derart mit der Eingangsstange 10 verbunden ist, dass die Ausgangsstange 18 mittels der in die Rotationsbewegung versetzten Eingangsstange 10 zumindest in eine durch den Pfeil 20 schematisch wiedergegebene Translationsbewegung versetzbar ist. Bevorzugter Weise wird die Ausgangsstange 18 mittels der zumindest in die Rotationsbewegung versetzen Eingangsstange um einen Verstellweg entlang einer durch die Ausgangsstange 18 verlaufenden Mittellängsachse 22 verstellt. Es wird jedoch darauf hingewiesen, dass die Bewegung, in welche die Ausgangsstange 18 mittels der mit dem Pedal 12 mitbewegten Eingangsstange 10 versetzbar ist, auch eine (minimale) Drehkomponente umfassen kann. Bei Nicht-Betätigung des Pedals 12 kann die Ausgangsstange 18 in einer Ausgangsstellung vorliegen.

Die Eingangsstange 10 und die Ausgangsstange 18 sind nicht auf eine stangenförmige Form beschränkt. Stattdessen können die Eingangsstange 10 und die Ausgangsstange 18 auch eine nicht-stangenförmige Form, insbesondere mit mindestens einem darin ausgebildeten Hohlraum, haben. Die Begriffe "Eingangsstange" und "Ausgangsstange" werden hier verwendet, weil sie herkömmlicher Weise auch bei einer von einer Stangenform abweichenden Form derartiger Komponenten gebraucht werden. Somit sind für den hier beschriebenen Rotations-Translations-Wandler alle bekannten Typen von Eingangskolben und Ausgangskolben als Komponenten 10 und 18 einsetzbar.

An den Enden P1 und P2 der Eingangsstange 10 können Kugelgelenke angeordnet sein, welche die Drehbewegung des Pedals 12 in die Translationsbewegung der Ausgangsstange 18 übersetzen. Da der zusammen mit der Sensoreinrichtung 8 verwendbare Rotations-Translations-Wandler nicht auf eine bestimmte Ausbildung der Übersetzungskomponenten zum Übersetzen der Drehbewegung des Pedals 12 in die Translationsbewegung der Ausgangsstange 18 limitiert ist, wird nicht genauer auf die an den Enden P1 und/oder P2 verwendbaren Kugelgelenke eingegangen.

Mittels des Rotations-Translations-Wandlers aus zumindest der Eingangsstange 10 und der Ausgangsstange 18 kann eine bei der Betätigung des Pedals durch einen Benutzer aufgebrachte Betätigungskraft Fb zumindest teilweise in eine axial ausgerichtete Kraft umgewandelt werden. Mittels der axial ausgerichteten Kraft kann beispielsweise ein Kolben in eine Kolben-Zylinder-Einheit, wie insbesondere einen Hauptbremszylinder, verstellt werden. Der hier beschriebene Rotations-Translations-Wandler ist jedoch nicht auf diese Nutzungsmöglichkeit der mittels der Ausgangsstange 18 bereitstellbaren axial ausgerichteten Kraft beschränkt.

Der Rotations-Translations-Wandler kann zusätzlich eine Fremdkrafteinrichtung umfassen, mittels welcher zusätzlich zu der übersetzten Komponente der Betätigungskraft Fb noch eine weitere Kraftkomponente als Teil der Gesamtkraft Fg zum Verstellen der Ausgangsstange 18 bereitstellbar ist. Bei der dargestellten Ausführungsform weist der Rotations-Translations-Wandler einen (schematisch wiedergegebenen) Bremskraftverstärker 24 auf, mittels welchem eine Unterstützungskraft als weitere Komponente der Gesamtkraft Fg zusätzlich zu der übersetzten Betätigungskraft Fb auf die Ausgangsstange 18 ausübbar ist. Der Bremskraftverstärker 24 kann beispielsweise als elektromechanischer Bremskraftverstärker und/oder als hydraulischen Bremskraftverstärker, insbesondere als stetig regelbarer/steuerbarer Bremskraftverstärker, ausgebildet sein. Die im Weiteren beschriebene erfindungsgemäße Technologie ist nicht auf einen bestimmten Typ des Bremskraftverstärkers 24 beschränkt. Anstelle des Bremskraftverstärkers 24 sind auch andere Modelle der Fremdkrafteinrichtung zusammen mit der Sensoreinrichtung 8 in den Rotations-Translations-Wandler integrierbar.

Der Bremskraftverstärker 24 kann über einen Unterstützungskolben und/oder über eine Elastizität, wie insbesondere eine Reaktionsscheibe, mit der Ausgangsstange 18 verbunden sein. Eine Stellung des verwendeten Unterstützungskolbens kann in Bezug zu der Eingangsstange 10 um einen Differenzweg Δs veränderbar sein. Da der Rotations-Translations-Wandler nicht auf eine bestimmte Anordnung der Fremdkrafteinrichtung an der Ausgangsstange 18 limitiert ist, wird hier nicht genauer darauf eingegangen.

Häufig ist es vorteilhaft, über eine Möglichkeit zum Ermitteln einer Information bezüglich einer Betätigung des Pedals 12 durch einen Benutzter zu verfügen. Beispielsweise kann in diesem Fall der als Fremdkrafteinrichtung verwendete Bremskraftverstärker 24 so angesteuert werden, dass die von dem Bremskraftverstärker 24 bereitgestellte Unterstützungskraft eine Funktion der Betätigungskraft Fb und/oder eine Funktion eines Verstellwegs/Betätigungswegs der Eingangsstange 10 (wie bsp. der später beschriebenen Größe sx und/oder sy) ist. Auf diese Weise ist die vom Fahrer aufzubringende Betätigungskraft Fb zum Betreiben der über das Pedal und den Rotations-Translations-Wandler betätigbaren Fahrzeugkomponente, wie insbesondere zum Betreiben eines hydraulischen Bremssystems, reduzierbar.

Um dies zu gewährleisten ist die Sensoreinrichtung 8 dazu ausgelegt, mindestens eine Größe bezüglich einer Stellung und/oder einer Stellungsänderung der in die Rotationsbewegung versetzten Eingangsstange 10 in Bezug zu einer vorgegebenen Raumrichtung zu ermitteln. Vorzugsweise ist die vorgegebene Raumrichtung die Mittellängsachse 22 der Ausgangsstange 18, insbesondere die Mittellängsachse 22 der in ihrer Ausgangsstellung vorliegenden Ausgangsstange 18. Die Ausführbarkeit der Sensoreinrichtung ist jedoch nicht auf dieses Beispiel für die vorgegebene Raumrichtung beschränkt.

Die mindestens eine Größe kann mindestens eine Größe bezüglich eines Abstands, einer Abstandsänderung, einer Ausrichtung und/oder einer Ausrichtungsänderung der in die Rotationsbewegung versetzten Eingangsstange 10 in Bezug zu der vorgegebenen Raumrichtung sein. Nachfolgend wird eine besonders einfach ausführbare Möglichkeit zum Ermitteln einer derartigen Größe ausgeführt:
Wie in Fig. 1 schematisch dargestellt ist, bewegt sich ein von dem zweiten Ende P2 beabstandeter Punkt P der Eingangsstange 10, bzw. ein entsprechender Abschnitt der Eingangsstange 10, bei der mittels des Pfeils 14 wiedergegebenen Rotationsbewegung auf einer Kurve um einen vorgegebenen Drehpunkt, beispielsweise um das zweite Ende P2. Der Punkt P wird bei der Rotationsbewegung somit um eine parallel zu der Mittellängsachse 22 der Ausgangsstange 18 ausgerichtete erste Ortsdifferenz sx und um eine senkrecht zu der Mittellängsachse 22 der Ausgangsstange 18 ausgerichtete zweite Ortsdifferenz sy verstellt. In einer bevorzugten Ausführungsform ist die Verbindung zwischen der Eingangsstange 10 und der Ausgangsstange 18 derart, dass die Bewegung des Punkts P (nahezu) einer Kreisbahn um das zweite Ende P2 entspricht. Die Anwendbarkeit der im Folgenden beschriebenen Sensoreinrichtung 8 ist jedoch nicht auf diese Ausführungsform beschränkt.

Die Sensoreinrichtung 8 der Fig. 1 ist dazu ausgelegt, als die mindestens eine Größe bezüglich der Stellung und/oder der Stellungsänderung der bewegten Eingangsstange 10 in Bezug zu der vorgegebenen Raumrichtung mindestens eine Größe bezüglich eines Abstand und/oder einer Abstandsänderung mindestens eines Punkts P der Eingangsstange 10 zu der Mittellängsachse 22 der Ausgangsstange 18, wie beispielsweise eine zweite Ortsdifferenz sy, zu ermitteln. Bevorzugter Weise ist die Sensoreinrichtung 8 dazu ausgelegt, als die mindestens eine Größe eine Feldgröße einer abstandsabhängigen Wechselwirkung zu ermitteln. Insbesondere kann mindestens eine magnetische Feldstärke und/oder elektrische Feldstärke mittels der Sensoreinrichtung 8 ermittelbar sein.

Dies ist beispielsweise mittels eines unverstellbar, insbesondere in der Sensoreinrichtung 8 angeordneten Hallsensors realisierbar, welcher dazu ausgelegt ist, eine Feldstärke eines Magnetfelds einer an dem mindestens einen Punkt P angeordneten magnetischen Komponente zu messen. Beispielsweise kann dazu zumindest ein Teil der Eingangsstange 10 über ein einfach ausführbares und kostengünstiges Magnetisierungsverfahren magnetisiert werden. Eine derartige Ausbildung der Sensoreinrichtung 8 mit lediglich dem einen Hallsensor ist auch bei einem vergleichsweise kleinen erfassbaren Messbereich des verwendeten Hallsensors von unter 10 mm, beispielsweise bei einem Messbereich von etwa 5 mm, zum verlässlichen Ermitteln der mindestens einen Größe geeignet. Trotz des relativ großen Verstellwegs der mit dem Pedal 12 mitbewegten Eingangsstange 10 liegt die vergleichsweise kleine Ortsdifferenz sy des Punkts P in der Regel innerhalb eines erfassbaren Messbereichs des Hallsensors von unter 10 mm.

Dies ist ein wesentlicher Vorteil gegenüber einer herkömmlichen Pedalbetätigungsmessung, bei welcher eine Information bezüglich der Betätigung des Pedals 12 über ein Messen des Verstellwegs der Ausgangsstange 18 entlang ihrer Mittellängsachse 22 gemessen wird. In der Regel liegt der Verstellweg der Ausgangsstange 18 entlang der Mittellängsachse 22 bei einer kräftigen Betätigung des Pedals 12 innerhalb eines Verstellbereichs/Wertebereichs von mindestens 10 mm, beispielsweise innerhalb eines Verstellbereichs/Wertebereichs von 48 mm. Ein derart großer Verstellbereich/Wertebereich kann nicht/kaum mittels eines einzigen Hallsensors und eines einen vertretbaren Bauraumbedarf aufweisenden Magnetens erfasst werden. Die Sensoreinrichtung 8 ist somit kostengünstiger als eine herkömmliche Pedalsensoreinrichtung realisierbar.

Die Sensoreinrichtung 8 ist jedoch nicht auf eine Ausstattung mit einem magnetischen Sensor, wie insbesondere einem Hallsensor, limitiert. Beispielsweise kann auch ein Detektor zum Ermitteln einer Auftreffposition eines an dem mindestens einen Punkt P reflektierten Lichtstrahls verwendet werden. Des Weiteren kann die Sensoreinrichtung 28 auch mindestens einen Kondensator aufweisen, welcher eine Kapazität zwischen einer an der Eingangsstange 10 angeordneten Elektrodenfläche und einer unverstellbar angeordneten Elektrodenfläche ermittelt.

Durch eine geeignete Anordnung der Eingangsstange 10 an dem Pedal 12, beziehungsweise durch eine bevorzugte Wahl des mindestens einen Punkts P, kann eine eindeutige Relation zwischen dem Abstand des mindestens einen Punkts P von der vorgegebenen Raumrichtung und der Stellung des Pedals 12 , bzw. der auf das Pedal 12 aufgebrachten Betätigungskraft Fb, sichergestellt werden. In diesem Fall bewirkt ein Verstellen des Pedals 12 in eine Bewegungsrichtung ausschließlich eine Zunahme oder ausschließlich eine Abnahme des Abstands zwischen dem mindestens einen Punkt P und der vorgegebenen Raumrichtung. Liegt keine eindeutige Relation vor, so kann eine Zu- oder Abnahme des Abstands, ein Vorzeichen der Abstandsänderung, eine Zu- oder Abnahme der ermittelten Feldstärke und/oder ein Vorzeichen einer Änderung der ermittelten Feldstärke von der Sensoreinrichtung 8 ermittelt und ausgewertet werden.

Die von der Sensoreinrichtung 8 ermittelte mindestens eine Größe bezüglich der Stellung und/oder der Stellungsänderung der in die Rotationsbewegung versetzten Eingangsstange 10 kann anschließend als Information über ein Sensorsignal 28 an eine Auswerteeinrichtung 30 ausgegeben werden. Die Auswerteeinrichtung 30 ist bevorzugter Weise dazu ausgelegt, unter Berücksichtigung des Sensorsignals 28 mit der mindestens einen Größe einen Soll-Funktionsmodus zumindest einer Komponente der mittels des Pedals 12 ansteuerbaren Vorrichtung festzulegen. In einer vorteilhaften Ausführungsform kann mittels der Auswerteeinrichtung 30 eine Soll-Unterstützungskraft des Bremskraftverstärkers 24 festgelegt werden. Anschließend kann der Bremskraftverstärker 24 über ein Steuersignal 32 unter Berücksichtigung der festgelegten Soll-Unterstützungskraft angesteuert werden.

Es wird hier darauf hingewiesen, dass die oben beschriebene erfindungsgemäße Technologie kein bewegtes Sensorelement erfordert. Somit stellt die erfindungsgemäße Technologie auch eine kostengünstige und einfacher ausführbare Alternative zur Differenzwegmessung, wie sie herkömmlicher Weise oft zum Betreiben eines Bremskraftverstärkers in einem Bremssystem angewandt wird, dar.

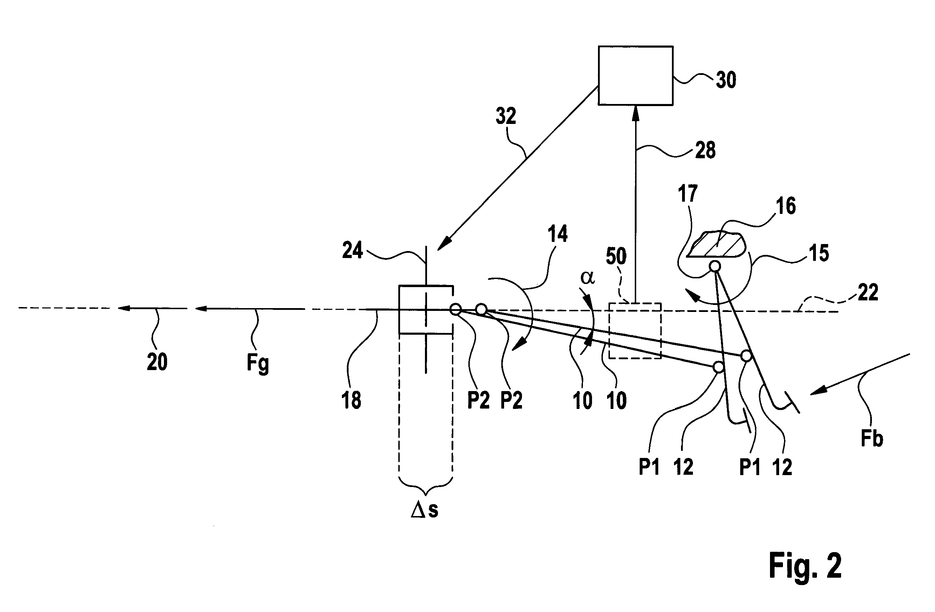

Fig. 2 zeigt eine schematische Darstellung einer zweiten Ausführungsform der Sensoreinrichtung.

Der in Fig. 2 dargestellte Rotations-Translations-Wandler umfasst die schon beschriebenen Komponenten 10, 18 und 24. Auf eine erneute Beschreibung der Komponenten 10, 18 und 24 wird deshalb hier verzichtet.

Im Unterschied zu der oben beschriebenen Ausführungsform ist die Sensoreinrichtung 50 der Fig. 2 für eine Ermittlung eines Winkels α, in welchem die Eingangsstange 10 zu der Mittellängsachse 22 der Ausgangsstange 18 ausgerichtet ist, als Größe bezüglich der Ausrichtung der Eingangstange ausgelegt. Beispielsweise kann die Sensoreinrichtung 50 bei einer Anordnung an dem Ende P2 eine direkte Winkelmessung des Winkels α ausführen.

Ebenso kann die Sensoreinrichtung 50 für eine indirekte Winkelmessung des Winkels α ausgelegt sein. Dies ist mit dem Vorteil verbunden, dass die Sensoreinrichtung 50 in diesem Fall nicht die bei einem mitbewegbaren Sensor anfallenden Anforderungen erfüllen muss und somit kostengünstiger herstellbar ist. Vorzugsweise ist die Sensoreinrichtung 50 außerhalb einer von den Stangen 10 und 18 aufgespannten Ebene angeordnet (siehe gestrichelte Linien). Somit ist die Sensoreinrichtung 50 im nahen Abstand zu der Eingangsstange 50 anordbar, ohne dass eine Bewegungsfreiheit der Eingangsstange 10 durch die Sensoreinrichtung 50 beeinträchtigt wird. Die Sensoreinrichtung 50 weist vorteilhafter Weise einen den AMR-Effekt (Anisotrope Magnetoresistive Effekt) verwendenden AMR-Sensor und/oder einen den GMR-Effekt (Giant Magnetoresistance Effekt) ausnützenden GMR-Sensor auf. Mittels eines derartigen Sensors ist der Winkel α zwischen der Eingangsstange 10 und der Mittellängsachse 22 der Ausgangsstange 18 auf einfache Weise verlässlich messbar. Beispielsweise kann dazu ein Magnet an der Eingangsstange 10 befestigt werden. In einer kostengünstigen Alternative wird die Eingangsstange 10 zumindest teilweise magnetisiert. Mittels der Sensoreinrichtung 50 ist in diesem Fall eine den Bewegungsbereich des Pedals 12 entsprechende Winkeländerung der Eingangsstange 10 bezüglich der raumfesten Achse ohne/mit vernachlässigbaren Fehlerabweichungen ermittelbar.

Als Alternative zu der hier beschriebenen Sensoreinrichtung 50 mit einem AMR-Sensor und/oder einem GMR-Sensor ist auch die Verwendung von zwei Wegmesselementen an zwei unterschiedlichen Punkten der Eingangsstange 10 zum Ermitteln der Lage der Eingangsstange 10 im Raum möglich.

Die von der Sensoreinrichtung 50 ermittelte mindestens eine Größe wird anschließend als Information über das Sensorsignal 28 an eine Auswerteeinrichtung 30 bereitgestellt. Die Auswerteeinrichtung 30 kann insbesondere dazu ausgelegt sein, unter Berücksichtigung der empfangenen Information eine Größe bezüglich der Translationsbewegung der Ausgangsstange 18 festzulegen. Somit können die Einrichtungen 50 und 30 auch die Funktion eines klassischen Wegsensors zum Festlegen eines Verstellwegs der Ausgangsstange 18, beziehungsweise deren Verstellgeschwindigkeit, ausführen. Die Auswerteverfahren zum Festlegen des Verstellwegs der Ausgangsstange 18 können als Software in der Auswerteeinrichtung 30, welche beispielsweise als elektronisches Steuergerät ausgebildet ist, abgelegt und zyklisch abgearbeitet werden. Alternativ können Kennlinien auf der Auswerteeinrichtung 30 abgespeichert sein, die eine geeignete Umwandlungsvorschrift zum Umwandeln der Information in den Verstellweg der Ausgangsstange 18 umfassen.

Bei der dargestellten Ausführungsform wird somit eine Wegmessung über eine Winkelmessung realisiert, wobei nur vergleichsweise kleine Winkeländerungen von der Sensoreinrichtung 50 erfasst werden müssen. Die auszuführende Winkelmessung ist deshalb wesentlich einfacher als eine Messung des Verstellweges der in eine Translationsbewegung versetzten Ausgangsstange 18. Die herkömmlicher Weise oft ausgeführte Messung des Verstellweges der Ausgangsstange 18 erfordert einen erfassbaren Messbereich des Verstellweges von etwa 40 mm, beispielsweise von 48 mm. Eine derartige Sensoranforderung ist mit einem kostengünstigen Hallsensor nicht erfüllbar.

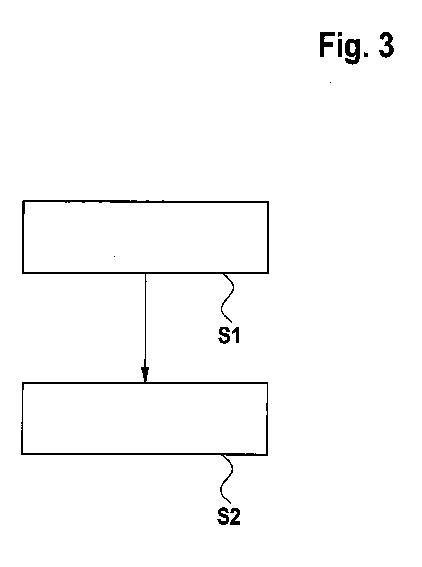

Fig. 3 zeigt ein Flussdiagramm zum Darstellen des Verfahrens zum Bereitstellen einer Information bezüglich einer Betätigung eines Pedals.

In einem Verfahrensschritt S1 wird mindestens eine Betätigungs-Größe bezüglich einer Betätigung des Pedals durch einen Benutzer einer mittels des Pedals ansteuerbaren Vorrichtung ermittelt. Beim Ermitteln der mindestens einen Betätigungs-Größe wird mindestens eine Größe bezüglich einer Stellung und/oder einer Stellungsänderung einer an dem Pedal angeordneten und über die Betätigung des Pedals zumindest in eine Rotationsbewegung versetzten Eingangstange in Bezug zu einer vorgegebenen Raumrichtung ermittelt. Insbesondere kann die mindestens eine Größe bezüglich der Stellung und/oder der Stellungsänderung der Eingangstange in Bezug zu einer Mittellängsachse einer in ihrer Ausgangsstellung vorliegenden und mittels der in die Rotationsbewegung versetzten Eingangsstange zumindest in eine Translationsbewegung versetzten Ausgangsstange als der vorgegebenen Raumrichtung ermittelt werden. Dazu kann mindestens eine Feldstärke, eine Feldstärkeänderung, eine Ausrichtung und/oder eine Ausrichtungsänderung eines elektrischen und/oder magnetischen Feldes einer an und/oder in der Eingangsstange angeordneten elektrisch und/oder magnetisch wechselwirkenden Komponente als die mindestens eine Größe ermittelt werden. Beispiele dazu sind in den oberen Absätzen zur Veranschaulichung der vorteilhaften Sensorvorrichtung bereits erläutert.

In einem weiteren Verfahrensschritt S2 wird die der mindestens einen ermittelten Betätigungs-Größe entsprechende Information ausgegeben. Somit sind auch mittels des Verfahrens die oben schon genannten Vorteile realisierbar.

## Patentansprüche

1. Sensoreinrichtung (8, 50) für ein Pedal (12)
welche dazu ausgelegt ist, mindestens eine Betätigungs-Größe bezüglich einer Betätigung (15) des Pedals (12) durch einen Benutzer einer mittels des Pedals (12) ansteuerbaren Vorrichtung zu ermitteln und eine der mindestens einen ermittelten Betätigungs-Größe entsprechende Information (28) auszugeben;
**dadurch gekennzeichnet, dass**
die Sensoreinrichtung (8, 50) zusätzlich dazu ausgelegt ist, als die mindestens eine Betätigungs-Größe mindestens eine Größe bezüglich einer Stellung (sy, α) und/oder einer Stellungsänderung einer an dem Pedal (12) angeordneten Eingangstange (10), welche über die Betätigung (15) des Pedals (12) zumindest in eine Rotationsbewegung (14) versetzbar ist, in Bezug zu einer vorgegebenen Raumrichtung (22) zu ermitteln.

2. Sensoreinrichtung (8, 50) nach Anspruch 1, wobei die vorgegebene Raumrichtung (22) eine Mittellängsachse (22) einer in ihrer Ausgangsstellung vorliegenden Ausgangsstange (18) ist, welche derart mit der Eingangstange (10) verbunden ist, dass die Ausgangstange (18) mittels der in die Rotationsbewegung (14) versetzten Eingangsstange (10) zumindest in eine Translationsbewegung (20) versetzbar ist.

3. Sensoreinrichtung (8, 50) nach Anspruch 1 oder 2, wobei die von der Sensoreinrichtung (8, 50) ermittelte mindestens eine Größe mindestens eine Feldstärke, eine Feldstärkeänderung, eine Ausrichtung und/oder eine Ausrichtungsänderung eines elektrischen und/oder magnetischen Feldes einer an und/oder in der Eingangsstange (10) angeordneten elektrisch und/oder magnetisch wechselwirkenden Komponente umfasst.

4. Sensoreinrichtung (8, 50) nach Anspruch 3, wobei die Sensoreinrichtung (8, 50) einen Hallsensor umfasst, welcher dazu ausgelegt ist, eine magnetische Feldstärke und/oder eine Feldstärkeänderung eines Magnetfelds eines als wechselwirkende Komponente an der Eingangsstange (10) angeordneten Magneten zu ermitteln.

5. Sensoreinrichtung (8, 50) nach Anspruch 3 oder 4, wobei die Sensoreinrichtung (8, 50) einen GMR-Sensor und/oder einen AMR-Sensor umfasst, welcher dazu ausgelegt ist, eine Ausrichtung und/oder eine Ausrichtungsänderung eines Magnetfelds eines als wechselwirkende Komponente an der Eingangsstange (10) angeordneten Magneten zu ermitteln.

6. Sensoreinrichtung (8, 50) nach einem der Ansprüche 1 bis 5, wobei die Sensoreinrichtung (8, 50) zusätzlich dazu ausgelegt ist, als zumindest Teil der ausgegebenen Information mindestens einen Abstand (sy) und/oder eine Abstandsänderung mindestens eines Punkts (P) der Eingangsstange (10) von der vorgegebenen Raumrichtung (22) und/oder eine Ausrichtung (α) und/oder einer Ausrichtungsänderung der Eingangsstange (10) von der vorgegebenen Raumrichtung (22) festzulegen.

7. Rotations-Translations-Wandler mit:
einer Eingangstange (10), welche derart an einem Pedal (12) anordbar ist, dass die Eingangsstange (10) bei einer Betätigung (15) des Pedals (12) zumindest in eine Rotationsbewegung (14) versetzbar ist;
einer Ausgangsstange (18), welche derart mit der Eingangstange (10) verbunden ist und derart an einer mittels des Pedals (14) ansteuerbaren Vorrichtung anordbar ist, dass die Ausgangstange (18) mittels der in die Rotationsbewegung (14) versetzten Eingangsstange (10) zumindest in eine Translationsbewegung (20) so versetzbar ist, dass eine Kraft (Fg) über die in die Translationsbewegung (20) versetzte Ausgangsstange (18) auf mindestens eine Komponente der Vorrichtung übertragbar ist; und
einer Sensoreinrichtung (8, 50) nach einem der Ansprüche 1 bis 6.

8. Rotations-Translations-Wandler nach Anspruch 7, wobei der Rotations-Translations-Wandler eine Auswerteeinrichtung (30) umfasst, welche dazu ausgelegt ist, unter Berücksichtigung der von der Sensoreinrichtung (8, 50) ausgegebenen Information (28) einen Soll-Funktionsmodus zumindest einer Komponente der mittels des Pedals (12) ansteuerbaren Vorrichtung festzulegen und ein dem festgelegten Soll-Funktionsmodus entsprechendes Steuersignal (32) bereitzustellen.

9. Rotations-Translations-Wandler nach Anspruch 7 oder 8, wobei die Eingangstange (10) magnetisiert ist.

10. Bremssystem mit einer Sensoreinrichtung nach einem der Ansprüche 1 bis 6 und/oder einem Rotations-Translations-Wandler nach einem der Ansprüche 7 bis 9.

11. Verfahren zum Bereitstellen einer Information (28) bezüglich einer Betätigung eines Pedals (12), mit den Schritten:
Ermitteln mindestens einer Betätigungs-Größe bezüglich einer Betätigung (15) des Pedals (12) durch einen Benutzer einer mittels des Pedals (12) ansteuerbaren Vorrichtung; und
Ausgeben der der mindestens einen ermittelten Betätigungs-Größe entsprechende Information (28);
**dadurch gekennzeichnet, dass**
beim Ermitteln der mindestens einen Betätigungs-Größe mindestens eine Größe bezüglich einer Stellung (sy, α) und/oder einer Stellungsänderung einer an dem Pedal (12) angeordneten und über die Betätigung (15) des Pedals (12) zumindest in eine Rotationsbewegung (14) versetzten Eingangstange (10) in Bezug zu einer vorgegebenen Raumrichtung (22) ermittelt wird.

12. Verfahren nach Anspruch 11, wobei die mindestens eine Größe bezüglich der Stellung (sy, α) und/oder der Stellungsänderung der Eingangstange (10) in Bezug zu einer Mittellängsachse (22) einer in ihrer Ausgangsstellung vorliegenden und mittels der in die Rotationsbewegung (14) versetzten Eingangsstange (10) zumindest in eine Translationsbewegung (20) versetzten Ausgangsstange (18) als der vorgegebenen Raumrichtung (22) ermittelt wird.

13. Verfahren nach Anspruch 11 oder 12, wobei mindestens eine Feldstärke, eine Feldstärkeänderung, eine Ausrichtung und/oder eine Ausrichtungsänderung eines elektrischen und/oder magnetischen Feldes einer an und/oder in der Eingangsstange (10) angeordneten elektrisch und/oder magnetisch wechselwirkenden Komponente als die mindestens eine Größe ermittelt wird.

## Claims

1. Sensor device (8, 50) for a pedal (12), which is configured to determine at least one activation variable relating to activation (15) of the pedal (12) by a user of a device which can be actuated by means of the pedal (12), and to output an information item (28) corresponding to the at least one determined activation variable;
**characterized in that**
the sensor device (8, 50) is additionally configured to determine, as the at least one activation variable, at least one variable relating to a position (sy, α) and/or a change in position of an input rod (10) which is arranged on the pedal (12) and can be made to undergo at least one rotational movement (14) by means of the activation (15) of the pedal (12), in relation to a predefined spatial direction (22).

2. Sensor device (8, 50) according to Claim 1, wherein the predefined spatial direction (22) is a central longitudinal axis (22) of an output rod (18) which is in its home position and which is connected to the input rod (10) in such a way that the output rod (18) is made to undergo at least one translatory movement (20) by means of the input rod (10) which is made to undergo the rotational movement (14).

3. Sensor device (8, 50) according to Claim 1 or 2, wherein the at least one variable which is determined by the sensor device (8, 50) comprises at least a field strength, a change in field strength, an orientation and/or a change in orientation of an electrical and/or magnetic field of a component which interacts electrically and/or magnetically and is arranged on and/or in the input rod (10).

4. Sensor device (8, 50) according to Claim 3, wherein the sensor device (8, 50) comprises a Hall sensor which is configured to determine a magnetic field strength and/or a change in field strength of a magnetic field of a magnet which is arranged as an interacting component on the input rod (10).

5. Sensor device (8, 50) according to Claim 3 or 4, wherein the sensor device (8, 50) comprises a GMR sensor and/or an AMR sensor which are/is configured to determine an orientation and/or a change in orientation of a magnetic field of a magnet which is arranged as an interacting component on the input rod (10).

6. Sensor device (8, 50) according to one of Claims 1 to 5, wherein the sensor device (8, 50) is additionally configured to define, as at least part of the information output, a distance (sy) and/or a change in distance of at least one point (P) of the input rod (10) from the predefined spatial direction (22) and/or an orientation (α) and/or a change in orientation of the input rod (10) from the predefined spatial direction (22).

7. Rotational-translatory converter, having:
an input rod (10) which can be arranged on a pedal (12) in such a way that when the pedal (12) is activated (15) the input rod (10) can be made to undergo at least one rotational movement (14);
an output rod (18) which is connected to the input rod (10) and can be arranged on a device which can be actuated by means of the pedal (14), in such a way that the output rod (18) can be made to undergo at least one translatory movement (20) by means of the input rod (10) which is made to undergo the rotational movement (14), in such a way that a force (Fg) can be transmitted to at least one component of the device via the output rod (18) which is made to undergo the translatory movement (20), and
a sensor device (8, 50) according to one of Claims 1 to 6.

8. Rotational-translatory converter according to Claim 7, wherein the rotational-translatory converter comprises an evaluation device (30) which is configured to define, while taking into account the information (28) output by the sensor device (8, 50), a setpoint functional mode for at least one component of the device which can be actuated by means of the pedal (12) and to make available a control signal (32) which corresponds to the defined setpoint functional mode.

9. Roational-translatory converter according to Claim 7 or 8, wherein the input rod (10) is magnetized.

10. Brake system having a sensor device according to one of Claims 1 to 6 and/or a rotational-translatory converter according to one of Claims 7 to 9.

11. Method for making available information (28) relating to activation of a pedal (12), having the steps:
determining at least one activation variable relating to activation (15) of the pedal (12) by a user of a device which can be actuated by means of the pedal (12); and
outputting the information (28) corresponding to the at least one determined activation variable;
**characterized in that**
when the at least one activation variable is determined at least one variable relating to a position (sy, α) and/or a change in position of an input rod (10), which is arranged on the pedal (12) and made to undergo at least one rotational movement (14) by means of the activation (15) of the pedal (12), in relation to a predefined spatial direction (22) is determined.

12. Method according to Claim 11, wherein the at least one variable relating to the position (sy, α) and/or the change in position of the input rod (10) is determined as the predefined spatial direction (22) in relation to a central longitudinal axis (22) of an output rod (18) which is in its home position and is made to undergo at least a translatary movement (20) by means of the input rod (10) which is made to undergo the rotational movement (14).

13. Method according to Claim 11 or 12, wherein at least a field strength, a change in field strength, an orientation and/or a change in orientation of an electrical and/or magnetic field of a component which interacts electrically and/or magnetically and is arranged in the input rod (10) is determined as the at least one variable.

## Revendications

1. Dispositif de détection (8, 50) pour une pédale (12), conçu pour calculer au moins un ordre de grandeur d'actionnement par rapport à un actionnement (15) de la pédale (12) par un utilisateur d'un dispositif pouvant être excité à l'aide de la pédale (12) et pour envoyer une information (28) correspondant à l'au moins un ordre de grandeur d'actionnement calculé ;
**caractérisé en ce que** :
le dispositif de détection (8, 50) est en outre conçu pour calculer, comme un ordre de grandeur d'actionnement au moins, au moins un ordre de grandeur par rapport à une position (sy, α) et/ou un changement de position d'une tringle d'entrée (10) disposée au niveau de la pédale (12) pouvant être transformé, via l'actionnement (15) de la pédale (12), au moins en un mouvement de rotation (14), par rapport à une direction spatiale prédéfinie (22).

2. Dispositif de détection (8, 50) selon la revendication 1, la direction spatiale prédéfinie (22) étant un axe central longitudinal (22) d'une tringle de sortie (18) présente dans sa position de sortie et reliée de telle sorte à la tringle d'entrée (10) que la tringle de sortie (18) peut être transformée au moins en un mouvement de translation (20) à l'aide de la tringle d'entrée (10) transformée en mouvement de rotation (14).

3. Dispositif de détection (8, 50) selon la revendication 1 ou 2, l'au moins un ordre de grandeur calculé par le dispositif de détection (8, 50) comprenant au moins une puissance de champ, une variation de puissance de champ, une orientation et/ou une variation d'orientation d'un champ électrique et/ou magnétique d'un composant interactif sur le plan électrique et/ou magnétique disposé au niveau de la tringle d'entrée (10) et/ou dans celle-ci.

4. Dispositif de détection (8, 50) selon la revendication 3, le dispositif de détection (8, 50) comprenant un capteur à effet de Hall conçu pour calculer une puissance de champ magnétique et/ou une variation de puissance de champ d'un champ magnétique d'un aimant prenant la forme d'un composant interactif et disposé au niveau de la tringle d'entrée (10).

5. Dispositif de détection (8, 50) selon la revendication 3 ou 4, le dispositif de détection (8, 50) comprenant un capteur GMR et/ou un capteur AMR et étant conçu pour calculer une orientation et/ou une variation d'orientation d'un champ magnétique d'un aimant prenant la forme d'un composant interactif et disposé au niveau de la tringle d'entrée (10).

6. Dispositif de détection (8, 50) selon l'une quelconque des revendications 1 à 5, le dispositif de détection (8, 50) étant en outre conçu pour déterminer, au moins sous la forme d'une partie des informations fournies, au moins une distance (sy) et/ou une variation de distance d'au moins un point (P) de la tringle d'entrée (10) par rapport à la direction spatiale prédéfinie (22) et/ou une orientation (α) et/ou une variation d'orientation de la tringle d'entrée (10) par rapport à la direction spatiale prédéfinie (22).

7. Convertisseur de rotation-translation doté de :
une tringle d'entrée (10) pouvant être agencée de telle sorte au niveau d'une pédale (12) que la tringle d'entrée (10) peut être transformée lors d'un actionnement (15) de la pédale (12) en au moins un mouvement de rotation (14) ;
une tringle de sortie (18) reliée de telle sorte à la tringle d'entrée (10) et pouvant être agencée de telle sorte au niveau d'un dispositif pouvant être excité à l'aide de la pédale (14) que la tringle de sortie (18) peut être transformée au moins en un mouvement de translation (20), à l'aide de la tringle d'entrée (10) transformée en mouvement de rotation (14), de telle sorte qu'une force (Fg) peut être transmise à au moins un composant du dispositif via la tringle de sortie (18) transformée en mouvement de translation (20) ; et un dispositif de détection (8, 50) selon l'une quelconque des revendications 1 à 6.

8. Convertisseur de rotation-translation selon la revendication 7, le convertisseur de rotation-translation comprenant un dispositif d'analyse (30) conçu pour tenir compte des informations (28) fournies par le dispositif de détection (8, 50) pour déterminer un mode de fonctionnement théorique d'au moins un composant du dispositif pouvant être excité à l'aide de la pédale (12) et pour mettre à disposition un signal de commande (32) correspondant au mode de fonctionnement théorique déterminé.

9. Convertisseur de rotation-translation selon la revendication 7 ou 8, la tringle d'entrée (10) étant aimantée.

10. Système de frein doté d'un dispositif de détection selon l'une quelconque des revendications 1 à 6 et/ou d'un convertisseur de rotation-translation selon l'une quelconque des revendications 7 à 9.

11. Procédé de mise à disposition d'une information (28) relative à un actionnement d'une pédale (12), avec les étapes suivantes :
calcul d'au moins un ordre de grandeur d'actionnement par rapport à un actionnement (15) de la pédale (12) par un utilisateur d'un dispositif pouvant être excité à l'aide de la pédale (12) ; et
envoi de l'information (28) correspondant à l'au moins un ordre de grandeur d'actionnement calculé ;
**caractérisé en ce que** :
lors du calcul de l'au moins un ordre de grandeur d'actionnement, au moins un ordre de grandeur par rapport à une position (sy, α) et/ou un changement de position d'une tringle d'entrée (10) disposée au niveau de la pédale (12) et transformée via l'actionnement (15) de la pédale (12) en au moins un mouvement de rotation (14) est calculé par rapport à une direction spatiale prédéfinie (22).

12. Procédé selon la revendication 11, l'au moins un ordre de grandeur par rapport à la position (sy, α) et/ou au changement de position de la tringle d'entrée (10) étant calculé comme étant la direction spatiale prédéfinie (22), par rapport à un axe central longitudinal (22), d'une tringle de sortie (18) présente dans sa position de sortie et transformée au moins en un mouvement de translation (20) à l'aide de la tringle d'entrée (10) transformée en mouvement de rotation (14).

13. Procédé selon la revendication 11 ou 12, au moins une puissance de champ, une variation de puissance de champ, une orientation et/ou une variation d'orientation d'un champ électrique et/ou magnétique d'un composant interactif disposé au niveau de la tringle d'entrée (10) et/ou dans celle-ci étant calculé sur le plan électrique et/ou magnétique comme l'au moins un ordre de grandeur.
